(19) **Europäisches Patentamt**
**European Patent Office**
**Office européen des brevets**

(11) **EP 1 744 572 A1**

(12) **EUROPÄISCHE PATENTANMELDUNG**

(43) Veröffentlichungstag:
 **17.01.2007 Patentblatt 2007/03**

(51) Int Cl.:
 ***H04Q 7/30*** *(2006.01)*

(21) Anmeldenummer: **05015256.0**

(22) Anmeldetag: **13.07.2005**

(84) Benannte Vertragsstaaten:
 **AT BE BG CH CY CZ DE DK EE ES FI FR GB GR HU IE IS IT LI LT LU LV MC NL PL PT RO SE SI SK TR**
 Benannte Erstreckungsstaaten:
 **AL BA HR MK YU**

(71) Anmelder: **SIEMENS AKTIENGESELLSCHAFT**
 **80333 München (DE)**

(72) Erfinder: **Kroener, Hans, Dr.**
 **73312 Geislingen-Weiler (DE)**

(54) **Übertragung von Ethernet-Paketen über eine CPRI-Schnittstelle**

(57) Die Erfindung betrifft ein Verfahren zum Betreiben einer Basisstation, bei dem die Basisstation eine erste Einheit (REC) und eine zweite Einheit (RE1, RE2, RE3) umfasst. Daten werden zwischen der ersten Einheit (REC) und der zweiten Einheit (RE1, RE2, RE3) über eine CPRI-Schnittstelle (CPRI) übertragen. Erfindungsgemäß werden CPRI-Daten als Ethernet-Pakete übertragen. Weiterhin betrifft die Erfindung eine Basisstation zur Durchführung der Erfindung.

FIG 2

EP 1 744 572 A1

**Beschreibung**

Die Erfindung betrifft ein Verfahren zum Betreiben einer Basisstation, bei dem die Basisstation eine CPRI-Schnittstelle zwischen einer ersten Einheit und einer zweiten Einheit umfasst. Weiterhin betrifft die Erfindung eine Basisstation zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen oder netzseitige Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

In Basisstationen von Funkkommunikationssystemen existieren verschiedene Einheiten, welche durch geeignete Schnittstellen miteinander verbunden sind. Basisstationen umfassen in der Regel Einheiten zur Basisbandverarbeitung, wobei in den Einrichtungen zur Basisbandverarbeitung Daten für bzw. von Teilnehmerstationen verarbeitet werden. Weiterhin existieren Sende- und Empfangseinheiten, welche von der Basisbandverarbeitung gelieferte Basisbanddaten auf Trägerfrequenzen aufmodulieren und an Teilnehmerstationen senden bzw. von Teilnehmerstationen auf den Trägerfrequenzen empfangene Daten in das Basisband umsetzen und an die Basisbandverarbeitung weitergeben. Die Verbindung zwischen einer Einheit zur Basisbandverarbeitung und einer Sende- und Empfangseinheit kann z.B. erfolgen über eine Schnittstelle gemäß dem CPRI Standard (aktuell: CPRI Specification V2.0 (2004-10-01), Common Public Radio Interface (CPRI); Interface Specification, erhältlich über http://www.cpri.info/).

Der Erfindung liegt die Aufgabe zugrunde, ein effizientes Verfahren zum Betreiben einer Basisstation und eine ebensolche Basisstation aufzuzeigen, bei welchen eine CPRI-Schnittstelle eingesetzt wird.

Diese Aufgabe wird durch ein Verfahren mit den Merkmalen des Anspruchs 1 und durch eine Vorrichtung mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zum Betreiben einer Basisstation werden Daten zwischen einer ersten Einheit und einer zweiten Einheit der Basisstation über eine CPRI-Schnittstelle übertragen. Erfindungsgemäß werden CPRI-Daten als Ethernet-Pakete übertragen.

Es existiert eine CPRI-Schnittstelle zwischen den beiden Einheiten der Basisstation. Somit weisen die beiden Einheiten in ihrem Protokollstapel Schichten auf, welche Daten gemäß dem CPRI-Standard verarbeiten. Diese CPRI-Daten werden gemäß der Erfindung paketiert und paketweise übertragen, wobei für die paketweise Übertragung der Ethernet-Standard verwendet wird. Somit werden zwischen der ersten und der zweiten Einheit nicht kontinuierlich Informationsbits übertragen, sondern paketweise, wobei zwischen den einzelnen Paketen Übertragungspausen existieren können. Dass Ethernet-Pakete CPRI-Daten beinhalten, bedeutet, dass sowohl die erste als auch die zweite Einheit bei der Verarbeitung der CPRI-Daten vollständig gemäß dem Ethernet-Protokoll, d.h. gemäß dem Standard IEEE 802.3, vorgehen. Insbesondere werden nicht lediglich Teile dieses Standards verwendet.

In Weiterbildung der Erfindung wird von der ersten Einheit und der zweiten Einheit bei der Verarbeitung der CPRI-Daten auf der untersten Protokollschicht das Ethernet-Protokoll verwendet. Bei den Protokollschichten handelt es sich hierbei um die Protokollschichten des ISO/OSI Schichtmodells. Auf über der Ethernet-Schicht liegenden Schichten verarbeiten die erste Einheit und die zweite Einheit die Daten gemäß den CPRI-Vorgaben.

Einer vorteilhaften Ausgestaltung der Erfindung gemäß entspricht eine den CPRI-Daten senderseitig hinzugefügte Leitungskodierung ausschließlich der Leitungskodierung gemäß dem Ethernet-Protokoll. Bei dem Sender kann es sich hierbei um die erste oder die zweite Einheit handeln. Es werden hierbei den CPRI-Daten keine weiteren Leitungskodierungsbits hinzugefügt als diejenigen, welche standardgemäß bei der Übertragung von Ethernet-Paketen verwendet werden.

Einer anderen Ausgestaltung der Erfindung gemäß enthalten die CPRI-Daten ausschließlich herstellerunabhängige Informationen. Durch diese Ausgestaltung wird die Übertragung von herstellerabhängigen Informationen bei der Übertragung von CPRI-Daten als Ethernet-Pakete ausgeschlossen.

Vorteilhaft ist es, wenn die CPRI-Daten keine für zukünftige Erweiterungen reservierten Bits enthalten. Derartige Bits erhöhen die Datenrate und daher kann zur Reduzierung der Datenrate auf sie verzichtet werden. Die Ethernet-Pakete enthalten somit ausschließlich aktuell zur Informationsvermittlung verwendete Bits.

In Weiterbildung der Erfindung werden in Bezug auf die in den CPRI-Daten enthaltenen Antennensignale ausschließlich empfangene oder zu versendende Antennensignale übertragen. Bei empfangenen Antennensignalen handelt es sich um Signale, welche von einer Antenne der Basisstation empfangen wurden und im Anschluss zwischen der ersten und der zweiten Einheit der Basisstation zu übertragen sind. Bei zu versendenden Antennensignalen handelt es sich um Signale, welche zwischen der ersten und der zweiten Einheit der Basisstation übertragen werden und im Anschluss von einer Antenne der Basisstation abzustrahlen sind. Es werden gemäß der betrachteten Weiterbildung lediglich verwendete Antennensignale über die CPRI-Schnittstelle übertragen. Füllbits für aktuell nicht verwendete Antennensignale werden nicht übertragen. Dies führt zu einer Reduktion der Datenrate im Vergleich zu dem Fall, dass eine bestimmte Anzahl von Antennensignalen über die CPRI-Schnittstelle übertragen wird, wovon jedoch lediglich ein Teil abzustrahlende oder empfangene Informationen beinhaltet.

Einer vorteilhaften Ausgestaltung der Erfindung gemäß werden die CPRI-Daten zwischen der ersten Einheit und einer Mehrzahl von zweiten Einheiten übertragen, wobei die erste Einheit mit einem Ethernet-Switch verbunden ist, und der Ethernet-Switch sternförmig mit der Mehrzahl von zweiten Einheiten verbunden ist. Hierbei kann die erste Einheit mit einer Ethernet-Leitung mit elektrischem oder optischem Übertragungsverfahren, wie z.B. mit einer GBit oder 100 GBit Ethernet-Leitung, mit dem Ethernet-Switch verbunden sein, und jede der zweiten Einheiten mit einer Ethernet-Leitung mit elektrischem Übertragungsverfahren, wie z.B. mit einer MBit oder 100 MBit Ethernet-Leitung, mit dem Ethernet-Switch verbunden sein. Diese Konstellation eignet sich insbesondere für Anwendungen in Gebäuden, in welchen bereits MBit-Ethernet-Leitungen gelegt sind, welche von der Basisstation verwendet werden können. Weiterhin kann die erste Einheit mit einer Ethernet-Leitung mit optischem Übertragungsverfahren, wie z.B. mit einer GBit oder 100 GBit Ethernet-Leitung, mit dem Ethernet-Switch verbunden sein, und jede der zweiten Einheiten mit einer Ethernet-Leitung mit elektrischem Übertragungsverfahren, wie z.B. mit einer GBit oder 100 GBit Ethernet-Leitung, mit dem Ethernet-Switch verbunden sein. Diese Konstellation eignet sich aufgrund der Verwendung des optischen Übertragungsverfahrens insbesondere für die Überbrückung großer Distanzen zwischen den beiden Einheiten der Basisstation.

In Ausgestaltung der Erfindung sind die erste Einheit und/oder zumindest eine der zweiten Einheiten über eine Mehrzahl von Ethernet-Leitungen mit dem Ethernet-Switch verbunden, wobei für die Übertragung über die Mehrzahl von Ethernet-Leitungen die Link Aggregation Methode angewandt wird.

Besonders vorteilhaft ist es, wenn die Ethernet-Pakete über eine oder mehrere Ethernet-Leitungen zwischen der ersten und der zweiten Einheit übertragen werden, wobei diese Ethernet-Leitungen auch zur Übertragung anderer Daten verwendet werden. In diesem Fall werden Ethernet-Leitungen nicht ausschließlich für die CPRI-Schnittstelle verwendet, vielmehr können sich CPRI-Daten mit Paketen anderer Anwendungen das Übertragungsmedium teilen. Hierzu ist es vorteilhaft, wenn für die Übertragung der Ethernet-Pakete der CPRI-Schnittstelle die VLAN-Technologie (Virtual Local Area Network) verwendet wird.

Die erfindungsgemäße Basisstation umfasst eine erste und eine zweite Einheit, zwischen welchen Daten über eine CPRI-Schnittstelle übertragen werden. Sie weist Mittel auf zum Übertragen von CPRI-Daten als Ethernet-Pakete.

Im folgenden wird die Erfindung anhand eines Ausführungsbeispiels näher erläutert. Dabei zeigen:

Figur 1:     ein Basisstationssystem nach dem Stand der Technik,

Figur 2:     ein erstes Basisstationssystem gemäß der Erfindung,

Figur 3a:    ein zweites Basisstationssystem gemäß der Erfindung für Indoor-Anwendungen,

Figur 3b:    ein drittes Basisstationssystem gemäß der Erfindung für Metro-Anwendungen.

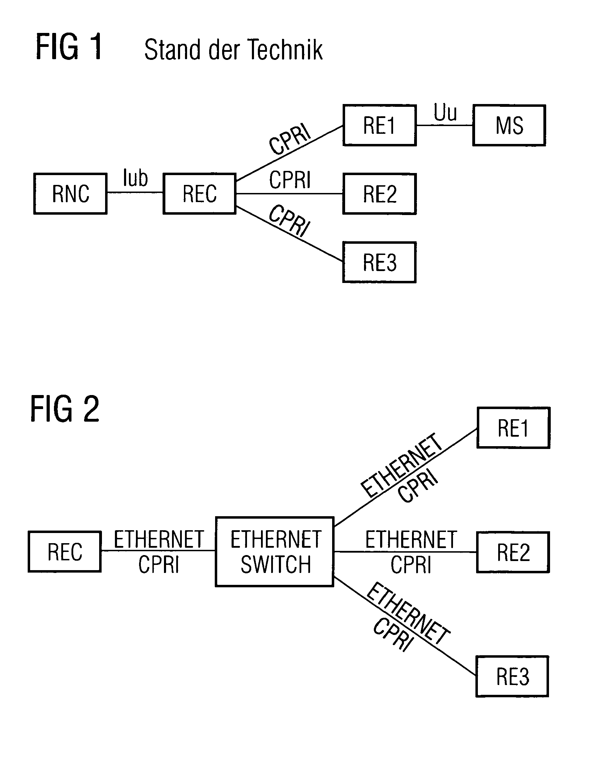

Das in Figur 1 dargestellte Basisstationssystem umfasst die Basisbandverarbeitungseinrichtung REC (Radio Equipment Controller), welche über die in UMTS mit Iub bezeichnete Schnittstelle mit einer Funknetzkontrolleinrichtung RNC (Radio Network Controller) verbunden ist. Die Basisbandverarbeitungseinrichtung REC ist mit den Sende- und Empfangseinheiten RE1, RE2 und RE3 (RE: Radio Equipment) jeweils über eine CPRI-Schnittstelle CPRI verbunden. Von den Sende- und Empfangseinheiten RE1, RE2 und RE3 werden Teilnehmerstationsdaten an Teilnehmerstationen ausgestrahlt bzw. von diesen empfangen. In Figur 1 ist beispielhaft die Teilnehmerstation MS dargestellt, welche über die in UMTS mit Uu bezeichnete Funkschnittstelle mit der Sende- und Empfangseinheit RE1 verbunden ist. Jede Sende- und Empfangseinheit RE1, RE2 und RE3 ist für die Ausstrahlung von Funksignalen auf einer Funkfrequenz bzw. in einem Frequenzband und/oder in einen Sektor zuständig.

Die CPRI Schnittstelle wird beschrieben in der derzeit gültigen Standardversion CPRI Specification V2.0, auf deren Inhalt hier verwiesen wird, und welcher zur Offenbarung der Anmeldung gehört. Die CPRI Schnittstelle verwendet ein elektrisches und/oder optisches Übertragungsverfahren auf der physikalischen Schicht. Über die CPRI Schnittstelle werden verschiedene Datentypen, nämlich Synchronisationsinformationen, Kontrollinformationen und Nutzdaten, unter Verwendung eines Zeitmultiplexverfahrens übertragen. Der CPRI-Standard definiert die Schichten 1 und 2 des ISO/OSI-Protokollstapels der CPRI-Schnittstelle. Gemäß dem Stand der Technik handelt es sich bei den über die CPRI Schnittstelle übertragenen Informationen um einen kontinuierlichen synchronen Datenstrom, welcher aus den zeitlich gemultiplexten Datentypen besteht.

Gemäß der Erfindung werden die CPRI-Daten, d.h. die über die CPRI-Schnittstelle CPRI zwischen der Basisbandverarbeitungseinrichtung REC und den Sende- und Empfangseinheiten RE1, RE2 und RE3 übertragenen Informationen, als Ethernet-Pakete übertragen. Gemäß Figur 2 ist hierzu die Basisbandverarbeitungseinrichtung REC an einen Ethernet-Switch ETHERNET SWITCH angeschlossen, welcher an die Sende- und Empfangseinheiten RE1, RE2 und RE3 angeschlossen ist. Dies bedeutet, dass für die CPRI-Daten auf der untersten Schicht des ISO/OSI-Protokollstapels das Ethernet-Protokoll ETHERNET zum Einsatz kommt. Im Gegensatz zum Stand der Technik wird kein kontinuierlicher synchroner Datenstrom über die CPRI-Schnittstelle übertragen, sondern Ethernet-Pakete. Über der Ethernet-Schicht liegen gemäß CPRI spezifizierte Schichten zur Verarbeitung der CPRI-Daten.

Gemäß dem derzeitigen CPRI-Standard sind auf der physikalischen Schicht Datenraten von 614.4 MBit/s, 1228.8 MBit/s oder 2457.6 MBit/s möglich. Für die Übertragung über Ethernet-Leitungen sind Datenraten von 10 MBit/s, 100 MBit/s, 1GBit/s oder 10 GBit/s möglich. Daher müsste für die 614.4 MBit/s CPRI-Verbindung eine 1GBit/s Ethernet-Leitung verwendet werden, für die 1228.8 MBit/s CPRI-Verbindung zwei 1GBit/s Ethernet-Leitungen, und für die 2457.6 MBit/s CPRI-Verbindung drei 1GBit/s Ethernet-Leitungen. Um die Anzahl bzw. die Bandbreite der zur Übertragung der CPRI-Daten erforderlichen Ethernet-Leitungen zu reduzieren, und somit die CPRI-Daten effizient als Ethernet-Pakete übertragen zu können, sind die folgenden Modifikationen möglich:

- Entfernung der Leitungskodierung:

    Bei der CPRI Leitungskodierung werden auf der physikalischen Schicht jeweils 8 Bits um 2 Bits Redundanz ergänzt. Verzichtet man auf diese Leitungskodierung, so reduziert dies die CPRI-Datenrate auf 491.520 MBit/s, 983.040 MBit/s oder 1966.080 MBit/s. Durch die Verwendung des Ethernet-Protokolls auf der physikalischen Schicht wird eine Leitungskodierung hinzugefügt, so dass die CPRI-Daten trotz Wegfall der CPRI-Leitungskodierung leitungskodiert übertragen werden.

    Gemäß dem Stand der Technik kann empfängerseitig bei der CPRI-Übertragung anhand der Leitungskodierung erkannt werden, welche Bestandteile der CPRI-Daten an welcher Stelle innerhalb des kontinuierlichen CPRI-Datenstroms zu finden ist. Entfällt die CPRI-Leitungskodierung, sollte eine Zuordnung geschaffen werden zwischen der Struktur der CPRI-Daten und den Ethernet-Paketen, welche die CPRI-Daten beinhalten. Beispielsweise können in die Ethernet-Pakete Informationsfelder eingefügt werden, welche Beginn und Ende von CPRI-Rahmen und CPRI-Hyperrahmen anzeigen.

- Entfernung der herstellerspezifischen Informationen und/oder der für zukünftige Erweiterungen reservierten Bits:

    Die Entfernung der herstellerspezifischen Kontrollinformationen aus den CPRI-Daten resultiert in einer Reduktion der CPRI-Datenrate um $\frac{16}{16 \cdot 256} = 0.0039$ bzw. $\frac{192}{16 \cdot 256} = 0.047$, abhängig von der Verwendung des Pointers.

    Die Entfernung der für zukünftige Erweiterungen reservierten Bits aus den CPRI-Daten resultiert in einer Reduktion der CPRI-Datenrate um $\frac{52}{16 \cdot 256} = 0.013$.

- Entfernung unbenutzter Antennensignale:

    Abhängig von der Ausgestaltung der Basisstation wird eine unterschiedliche Anzahl von Antennensignalen benötigt, wobei unter einem Antennensignal das von einer Antenne ausgestrahlte oder empfangene Signal verstanden wird. Gewöhnlicherweise weist eine UMTS-Basisstation sechs Antennen auf, während eine Mikrobasisstation lediglich eine Antenne aufweist. Aufgrund der unterschiedlichen Anzahl verwendeter Antennen ist es möglich, dass bei CPRI Übertragungsressourcen, welche für Antennensignale vorgesehen sind und reserviert werden, nicht genutzt werden. Für unbenutzte Antennensignale werden Nullen zwischen der Basisbandverarbeitungseinrichtung REC und den Sende- und Empfangseinheiten RE1, RE2 und RE3 übertragen. Indem diese ungenutzten Ressourcen aus den CPRI-Daten entfernt werden, wird die für die Übertragung der CPRI-Daten benötigte Bandbreite weiter reduziert.

Unter Verwendung der erläuterten Maßnahmen ist es möglich, eine Verbindung für CPRI-Daten, welche ursprünglich 1228.8 MBit/s benötigt, über eine 1 GBit/s Ethernet-Leitung zu übertragen, eine 2457.6 MBit/s CPRI-Verbindung über zwei 1 GBit/s Ethernet-Leitungen, und eine 614.4 MBit/s CPRI-Verbindung über wenige 100 MBit/s Ethernet-Leitungen.

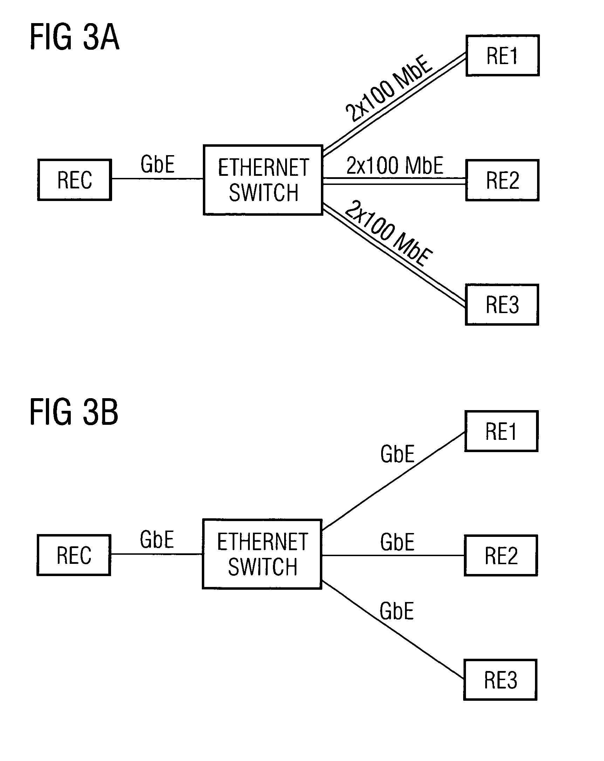

Werden die CPRI-Daten über Ethernet-Pakete übertragen, so können zur Verbindung der Basisbandverarbeitungseinrichtung REC mit den Sende- und Empfangseinheiten RE1, RE2 und RE3 bestehende Ethernet-Leitungen eingesetzt werden. Die Figuren 3a und 3b zeigen Beispiele für die Verwendung bestehender Ethernet-Leitungen für die Verbindung zwischen der Basisbandverarbeitungseinrichtung REC und den Sende- und Empfangseinheiten RE1, RE2 und RE3.

Die Konstellation gemäß Figur 3a eignet sich insbesondere für Indoor-Anwendungen, d.h. für Fälle, bei welchen die Sende-und Empfangseinheiten RE1, RE2 und RE3 sich innerhalb eines Gebäudes befinden. Die Basisbandverarbeitungseinrichtung REC ist über eine Gigabit-Ethernet-Leitung GbE mit dem Ethernet-Switch ETHERNET SWITCH verbunden, während die Sende- und Empfangseinheiten RE1, RE2 und RE3 jeweils über zwei 100 MBit-Ethernet-Leitungen 100 MbE mit dem Ethernet-Switch ETHERNET SWITCH verbunden sind. Es ist selbstverständlich möglich, dass die Sende- und Empfangseinheiten RE1, RE2 und RE3 jeweils über unterschiedliche Anzahlen von Ethernet-Leitungen mit dem Ethernet-Switch ETHERNET SWITCH verbunden werden. Eine Indoor-Basisstation versorgt in der Regel lediglich eine Funkzelle, wobei unter einer Funkzelle ein bestimmter Sektor in Kombination mit einem bestimmten Frequenzband verstanden wird. Daher muss bei einer Indoor-Basisstation von und zu den Sende- und Empfangseinheiten RE1, RE2 und RE3 keine hohen Datenraten übertragen werden, so dass die beiden 100 MBit-Ethernet-Leitungen 100 MbE ausreichend zur Versorgung von jeweils einer Sende- und Empfangseinheit RE1, RE2 oder RE3 sind. Bei 100 MBit-Ethernet-Leitungen wird ein elektrisches Übertragungsverfahren verwendet, die Reichweite dieser Verbindungen beträgt maximal einige 100 Meter. Viele Gebäude weisen eine Verkabelung mit 100 MBit-Ethernet-Leitungen auf, so dass bereits bestehende Leitungen für die Übertragung der CPRI-Daten verwendet werden können.

Die Konstellation gemäß Figur 3b eignet sich insbesondere für Metro-Anwendungen, d.h. für Fälle, bei welchen die Sende- und Empfangseinheiten RE1, RE2 und RE3 innerhalb eines Gebietes, welches etwa die Größe einer Stadt aufweist, verteilt sind. Die Basisbandverarbeitungseinrichtung REC ist über eine Gigabit-Ethernet-Leitung GbE mit dem Ethernet-Switch ETHERNET SWITCH verbunden, und auch die Sende- und Empfangseinheiten RE1, RE2 und RE3 sind jeweils über eine Gigabit-Ethernet-Leitung GbE mit dem Ethernet-Switch ETHERNET SWITCH verbunden. Zur Funkabdeckung eines städtischen Gebietes müssen die Sende- und Empfangseinheiten RE1, RE2 und RE3 im Vergleich zum Indoor-Szenario einen größeren geografischen Bereich abdecken, eine Basisstation versorgt in diesem Fall in der Regel mehrere Funkzellen. Daher wird eine größere Menge an Informationen von den Sende- und Empfangseinheiten RE1, RE2 und RE3 an Teilnehmerstationen abgestrahlt bzw. von diesen empfangen als bei dem Indoor-Szenario, so dass sich die Anbindung der Sende- und Empfangseinheiten RE1, RE2 und RE3 über Gigabit-Ethernet-Leitungen GbE anbietet. Für die Gigabit-Ethernet-Leitungen GbE wird ein optisches Übertragungsverfahren verwendet, so dass die Gigabit-Ethernet-Leitungen sich über einige Kilometer erstrecken können. Anstelle der Gigabit-Ethernet-Leitungen GbE können auch 10 Gigabit-Ethernet-Leitungen zum Einsatz kommen. Die Übertragung von CPRI-Daten über Gigabit-Ethernet-Leitungen ist vorteilhaft, da diese Verbindungen nicht teuer sind und in zunehmendem Maß gelegt werden.

Vorteilhaft ist es, wenn über die Ethernet-Leitungen nicht ausschließlich CPRI-Daten transportiert werden, sondern auch andere Daten. Die Übertragungsressource der Ethernet-Leitungen können somit aufgeteilt werden zwischen der CPRI-Anwendung und anderen Anwendungen. Da die CPRI-Daten in Echtzeit übertragen werden müssen, ist es vorteilhaft, die von Ethernet bekannte VLAN (VLAN: Virtual Local Area Network) Technologie einzusetzen. Hierdurch kann den CPRI-Daten eine höhere Priorität zugeordnet werden als den Daten der anderen Anwendungen. VLAN ist beschrieben z.B. in

IEEE: Carrier sense multiple access with collision detection (CSMA/CD) access method and physical layer specification, IEEE Standards IEEE 802.3, 2002, Teil 1, insbesondere S. 42 bis 43, und

802.1Q, IEEE Standards for Local and metropolitan area networks, Virtual Bridged Local Area Networks, 7. Mai 2003.

Werden mehrere parallele Ethernet-Leitungen eingesetzt, wie in Figur 3a beispielsweise zwischen dem Ethernet-Switch ETHERNET SWITCH und den Sende- und Empfangseinheiten RE1, RE2 und RE3, bietet sich die Verwendung der von Ethernet bekannten Link Aggregation Methode an, beschrieben z.B. in

IEEE: Carrier sense multiple access with collision detection (CSMA/CD) access method and physical layer specification, IEEE Standards IEEE 802.3, 2002, Teil 2, insbesondere S. 269 ff.

Hierbei werden Daten abwechselnd in die mehreren Leitungen gegeben.

**Patentansprüche**

1. Verfahren zum Betreiben einer Basisstation, bei dem die Basisstation eine erste Einheit (REC) und eine zweite Einheit (RE1, RE2, RE3) umfasst,
   Daten zwischen der ersten Einheit (REC) und der zweiten Einheit (RE1, RE2, RE3) über eine CPRI-Schnittstelle (CPRI) übertragen werden,
   **dadurch gekennzeichnet,**
   **dass** CPRI-Daten als Ethernet-Pakete übertragen werden.

2. Verfahren nach Anspruch 1, bei dem
   von der ersten Einheit (REC) und der zweiten Einheit (RE1, RE2, RE3) bei der Verarbeitung der CPRI-Daten auf der untersten Protokollschicht das Ethernet-Protokoll verwendet wird.

3. Verfahren nach einem der Ansprüche 1 bis 2, bei dem
   eine den CPRI-Daten senderseitig hinzugefügte Leitungskodierung ausschließlich der Leitungskodierung gemäß dem Ethernet-Protokoll entspricht.

4. Verfahren nach einem der Ansprüche 1 bis 3, bei dem
   die CPRI-Daten ausschließlich herstellerunabhängige Informationen enthalten.

5. Verfahren nach einem der Ansprüche 1 bis 4, bei dem
   die CPRI-Daten keine für zukünftige Erweiterungen reservierte Bits enthalten.

6. Verfahren nach einem der Ansprüche 1 bis 5, bei dem
   in Bezug auf die in den CPRI-Daten enthaltenen Antennensignale ausschließlich empfangene oder zu versendende Antennensignale übertragen werden.

7. Verfahren nach einem der Ansprüche 1 bis 6, bei dem
   die CPRI-Daten zwischen der ersten Einheit (REC) und einer Mehrzahl von zweiten Einheiten (RE1, RE2, RE3) übertragen werden, wobei die erste Einheit (REC) mit einem Ethernet-Switch (ETHERNET SWITCH) verbunden ist, und der Ethernet-Switch (ETHERNET SWITCH) sternförmig mit der Mehrzahl von zweiten Einheiten (RE1, RE2, RE3) verbunden ist.

8. Verfahren nach Anspruch 7, bei dem
   die erste Einheit (REC) mit einer Ethernet-Leitung (GbE) mit elektrischem oder optischem Übertragungsverfahren mit dem Ethernet-Switch (ETHERNET SWITCH) verbunden ist, und jede der zweiten Einheiten (RE1, RE2, RE3) mit einer Ethernet-Leitungen (100 MbE) mit elektrischem Übertragungsverfahren mit dem Ethernet-Switch (ETHERNET SWITCH) verbunden ist.

9. Verfahren nach Anspruch 7, bei dem
   die erste Einheit (REC) mit einer Ethernet-Leitung (GbE) mit optischem Übertragungsverfahren mit dem Ethernet-Switch (ETHERNET SWITCH) verbunden ist, und jede der zweiten Einheiten (RE1, RE2, RE3) mit einer Ethernet-Leitung (GbE) mit optischem Übertragungsverfahren mit dem Ethernet-Switch (ETHERNET SWITCH) verbunden ist.

10. Verfahren nach einem der Ansprüche 7 bis 9, bei dem
    die erste Einheit (REC) und/oder zumindest eine der zweiten Einheiten (RE1, RE2, RE3) über eine Mehrzahl von Ethernet-Leitungen (GbE, 100 MbE) mit dem Ethernet-Switch (ETHERNET SWITCH) verbunden sind, wobei für die Übertragung über die Mehrzahl von Ethernet-Leitungen (GbE, 100 MbE) die Link Aggregation Methode angewandt wird.

11. Verfahren nach einem der Ansprüche 1 bis 10, bei dem
    die Ethernet-Pakete über eine oder mehrere Ethernet-Leitungen (GbE, 100 MbE) zwischen der ersten Einheit (REC) und der zweiten Einheit (RE1, RE2, RE3) übertragen werden, wobei diese Ethernet-Leitungen (GbE, 100 MbE) auch zur Übertragung anderer Daten verwendet werden.

12. Verfahren nach Anspruch 11, bei dem
    zur Übertragung der Ethernet-Pakete VLAN verwendet wird.

**13.** Basisstation mit einer ersten Einheit (REC) und einer zweiten Einheit (RE1, RE2, RE3), zwischen welchen Daten über eine CPRI-Schnittstelle (CPRI) übertragen werden, **gekennzeichnet durch** Mittel zum Übertragen von CPRI-Daten als Ethernet-Pakete.

# FIG 1 Stand der Technik

```
                                    ┌─────┐      ┌─────┐
                              CPRI  │ RE1 │──Uu──│ MS  │
                              ╱     └─────┘      └─────┘
┌─────┐  Iub  ┌─────┐  CPRI  ┌─────┐
│ RNC │───────│ REC │────────│ RE2 │
└─────┘       └─────┘  ╲     └─────┘
                    CPRI ╲    ┌─────┐
                          ╲   │ RE3 │
                              └─────┘
```

# FIG 2

```
                                        ETHERNET   ┌─────┐
                                          CPRI     │ RE1 │
                                         ╱         └─────┘
┌─────┐  ETHERNET  ┌──────────┐ ETHERNET ┌─────┐
│ REC │────────────│ ETHERNET │──CPRI────│ RE2 │
└─────┘   CPRI     │  SWITCH  │          └─────┘
                   └──────────┘ ╲
                          ETHERNET ╲   ┌─────┐
                            CPRI    ╲  │ RE3 │
                                       └─────┘
```

## FIG 3A

## FIG 3B

**Europäisches Patentamt**

**EUROPÄISCHER RECHERCHENBERICHT**

Nummer der Anmeldung

EP 05 01 5256

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | "CPRI Specification V2.0 (2004-10-01)" COMMON PUBLIC RADIO INTERFACE (CPRI); INTERFACE SPECIFICATION, [Online] 1. Oktober 2004 (2004-10-01), Seiten 1-75, XP002359217 Gefunden im Internet: URL:http://www.cpri.online/> [gefunden am 2005-12-14] * Seite 4, Zeile 9 - Zeile 31 * * Seite 7, Zeile 5 - Zeile 25 * * Seite 21, Zeile 1 - Zeile 28 * * Seite 23, Zeile 1 - Zeile 37 * * Seite 33, Zeile 20 - Zeile 23 * * Seite 36, Zeile 1 - Seite 37, Zeile 4 * * Seite 45, Zeile 5 - Zeile 18 * ----- | 1-13 | H04Q7/30 |
| X | WO 2005/048625 A (TELEFONAKTIEBOLAGET LM ERICSSON) 26. Mai 2005 (2005-05-26) * Absatz [0003] * * Absatz [0012] - Absatz [0013] * * Absatz [0037] * * Absatz [0048] * * Absatz [0051] * ----- | 1-13 | |

RECHERCHIERTE SACHGEBIETE (IPC)

H04Q

Der vorliegende Recherchenbericht wurde für alle Patentansprüche erstellt

| Recherchenort | Abschlußdatum der Recherche | Prüfer |
|---|---|---|
| Den Haag | 15. Dezember 2005 | Heinrich, D |

**ANHANG ZUM EUROPÄISCHEN RECHERCHENBERICHT
ÜBER DIE EUROPÄISCHE PATENTANMELDUNG NR.**

EP 05 01 5256

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2005

| Im Recherchenbericht angeführtes Patentdokument | Datum der Veröffentlichung | Mitglied(er) der Patentfamilie | Datum der Veröffentlichung |
|---|---|---|---|
| WO 2005048625 A | 26-05-2005 | KEINE | |

EPO FORM P0461

Für nähere Einzelheiten zu diesem Anhang : siehe Amtsblatt des Europäischen Patentamts, Nr.12/82